# EUROPEAN PATENT SPECIFICATION

(11) **EP 0 580 217 B1**
(45) Date of publication and mention of the grant of the patent: **21.10.1998**
(21) Application number: 93202036.5
(22) Date of filing: 09.07.1993
(51) Int. Cl.: H02J 3/14, H02H 11/00

(54) **Electronic switching-on apparatus and a switching-on method**
Elektronische Vorrichtung zur Einschaltung und Verfahren
Appareil électronique de mise sous tension et méthode de mise sous tension

(30) Priority: 13.07.1992 NL 9201261
(43) Date of publication of application: 26.01.1994
(73) Proprietor: HOLEC HOLLAND N.V., 7555 CS Hengelo (NL)
(72) Inventor: Morskieft, Elisabeth Johanna Maria, NL-7556 AE Hengelo (NL); Fahner, Geugje Justus, NL-7552 KR Hengelo (NL); Groenenboom, Maarten, NL-7468 BN Enter (NL)
(74) Representative: de Bruijn, Leendert C.

(56) References cited:
- EP-A- 0 163 572
- FR-A- 2 094 994
- US-A- 3 317 802
- US-A- 3 937 978
- US-A- 4 774 441
- US-A- 4 987 513

## Description

The present invention relates to an apparatus for automatically switching on again at least one load in accordance with the preamble of claim 1.

Such an apparatus is disclosed in US-A-4.987.513 and is arranged to solve the problem of a "cold start" of electrical loads after a failure of the mains voltage. Such a "cold start" is characterised by a sudden peak power consumption, because many electrical loads show rather large peak currents during a restart phase. By applying the measures mentioned above it is possible to delay the restart of different loads by a different amount of time in order to stagger the various restarts and to prevent an overload of the mains. However, in the apparatus as known predetermined delay times in order to have a reliable safety margin are used. Safety margins of this type result in time being wasted.

The problem is, in particular, present in the field of remote control of "motor control centres". Said "motor control centres" are, for instance, used in process engineering for controlling the process, measuring process variables and signalling process states, as well as for protecting the motors used in the process. The "motor control centres" usually comprise modules, often in the form of drawers which can be removed from a cabinet, each module being linked to one motor. Each of these modules contains the equipment necessary for controlling the motor linked to the module and protecting it electrically, and can comprise one or more panels. EP-A-0,163,572 per se discloses the remote control of "motor control centres" in the context of further automation thereof.

FR-A-2.094.994 describes an apparatus arranged to start various electrical machines connected to a mains, comprising a detector detecting a possible overload of the mains and supplying an enable signal, if the mains voltage is restored. Every machine may only be restarted by control means upon receipt of a specific code related to the machine concerned and supplied by an operator. However, although not all machines will request for a restart after a mains failure, the control means uses a predetermined restart table which comprises all machines connected. During the restart phase the control means "runs" through the entire table with a predetermined speed without avoiding the machines not having requested a restart. Therefore, time is waisted during the restart phase.

It is therefore an object of the present invention to provide an apparatus and a method for automatically switching loads on again, which shorten as far as possible the time required for the loads to be switched on again.

This object is obtained by an apparatus as defined above and that is characterised by the characterising features of claim 1.

The invention also relates to a method as defined in method claim 5.

In one embodiment of the apparatus described in US-A-4.987.513 mentioned above the switching means will not be opened if the mains failure does not last longer than a predetermined amount of time. So, in that case loads will not be disconnected from the mains. However, in the present invention, upon a mains failure all closed switching means will automatically be opened and will be reclosed simultaneously, when the mains failure does not last longer than a predetermined amount of time.

Applying the measures according to the invention results in each motor or set of motors being switched on again in as short a time as possible, while the necessary safety margins are being observed.

The invention will be explained in more detail with reference to a few drawings which are intended solely for illustrative purposes and not as a limitation of the concept of the invention, and in which
Figure 1 shows a remote-controlled "motor control centre";
Figure 2 shows a view of a central control unit;
Figure 3 shows a view of a start control unit;
Figure 4 shows an example of a three-phase supply with an electromagnetic switch used for a motor;
Figure 5 shows a flowchart of the method according to the invention;
Figure 6 shows an example of the starting current of a motor.

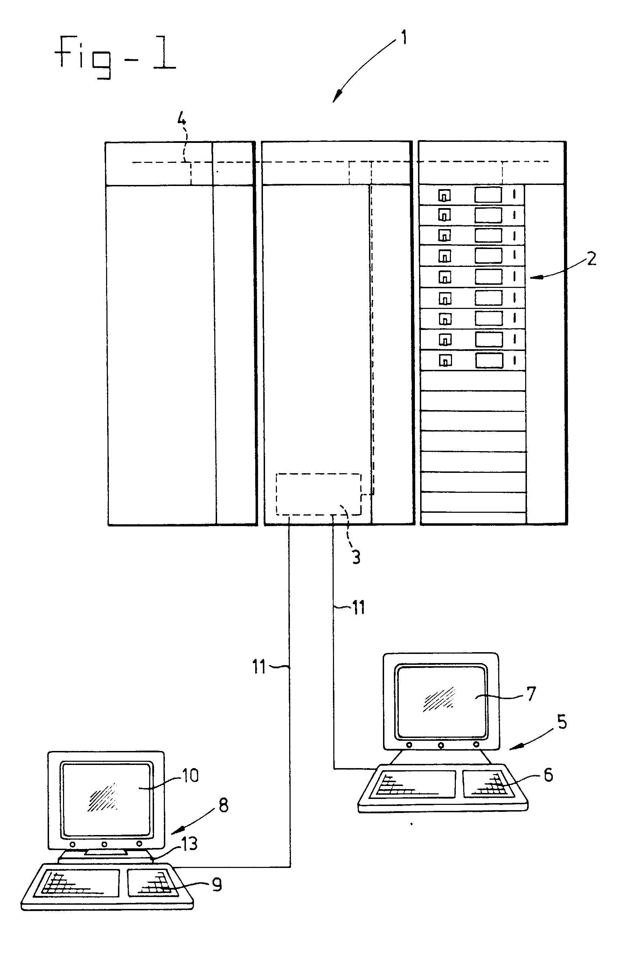

An example of a remote-controlled "motor control centre" 1 is shown in Figure 1. The "motor control centre" 1 shown there comprises at least one or more start control units 2 (SCU), each of which control one motor or a set of motors, and also ensure the protection thereof. Each of the SCUs 2 is connected to a first data bus 4 for receiving and transmitting information. The "motor control centre" 1 further comprises a central control unit 3 (CU) which is likewise connected to the first data bus 4. The central control unit 3 is connected, via a second data bus 11 to a local control unit 5 (LCU) which, for example, comprises a keyboard 6 and a screen 7. With the aid of the keyboard 6 and the screen 7, a local user can give commands to the central control unit 3, for example to switch off a certain motor. In addition, the central control unit 3 can provide information to the local control unit 5 via the second data bus 11. It will be evident that, although only one local control unit 5 is drawn, various local control units can be used.

Via the second data bus 11, the central control unit 3 is also connected to one or more remote control units 8 (DCS) which may each comprise a keyboard 9, a screen 10 and means for storing and processing data 13. Other configurations are of course conceivable.

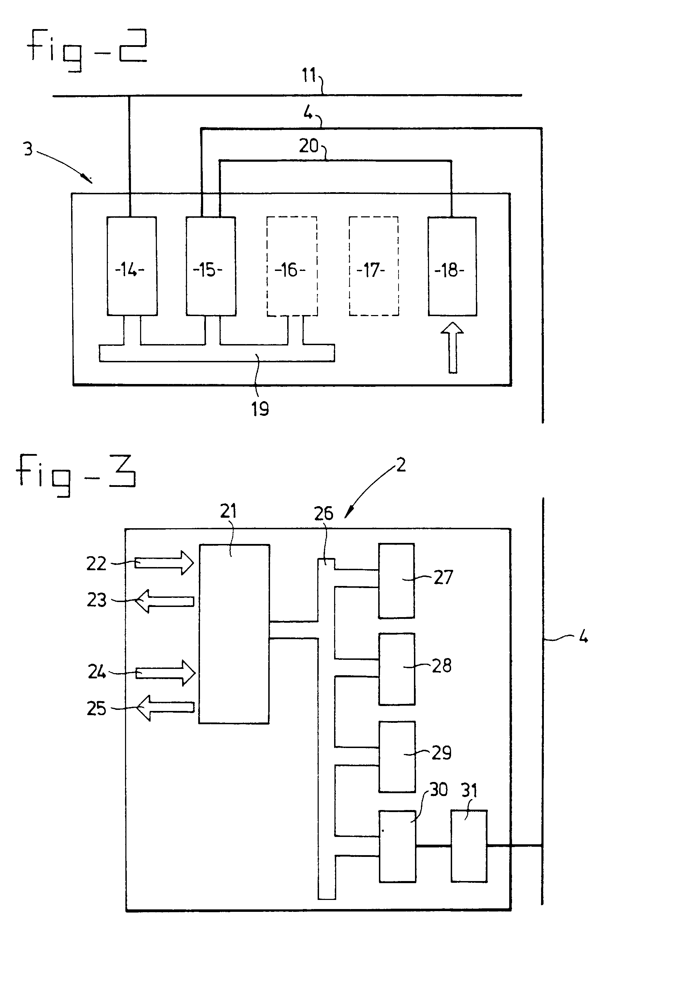

Figure 2 shows a view of possible functional units used in the central control unit 3. The central control unit 3 is connected, via a central data processing card 14, to the second data bus 11 which leads to the remote control units 8 and the local control units 5 (Figure 1). The central control unit 3 further comprises one or more start control communication units 15, 16 which are each connected to the first data bus 4 and, via a data line 20, to one or more analog mains voltage measuring cards 17, 18. Internal communication between the central data processing card 14 and the start control communication units 15, 16 within the central control unit 3 takes place via a VME bus 19 (VME = Versa Module Eurocard).

The central data processing card 14 deals with the following functions:
- storage of data from the entire reclosing system, as shown in Figure 1;
- communication via data bus 11;
- "master" module for the VME system;
- delayed switching-on again of motors after a prolonged mains failure. The motors requiring switching-on again report via the first data bus 4, the start control communication units 15, 16 and the VME bus 19.

Each of the two identical start control communication units 15, 16 is intended to perform the following functions:
- interface with the VME bus 19;
- communication with the start control units 2 via the first data bus 4;
- signalling the state of an individual mains based on information obtained via data line 20, and reporting this to the start control units 2.

The mains voltage measuring cards 17, 18 are identical and designed for the following functions:
- measuring the state of an individual mains by means of filters not specified in any detail;
- reporting said state to the respective start control communication units 15, 16 via data line 20.

If both the start control communication units 15, 16 are used as well as both of the mains voltage measuring cards 17, 18, the central control unit can monitor two separate mains each of which supply their own motors or sets of motors.

Figure 3 shows a possible embodiment of one of the start control units 2 used. Each start control unit comprises a microprocessor 21 which can directly receive or transmit digital information via data lines 22 and 23, respectively and can directly receive or transmit analog data via data lines 24 and 25, respectively. The microprocessor 21 is further connected to an internal data bus 26 which in turn is connected to a programmable read-only memory (PROM) 27, a random-access memory (RAM) 28, an electrically erasable programmable read-only memory (EEPROM) 29 and the first data base 4 via interface means 30, 31.

The programmable read-only memory 27 comprises predefined computer programs. The random-access memory 28 can be used to store motor-setting data and current motor data which may, if required, be adjusted by a user. The electrically erasable programmable read-only memory 29 is used to store predefined motor-setting data.

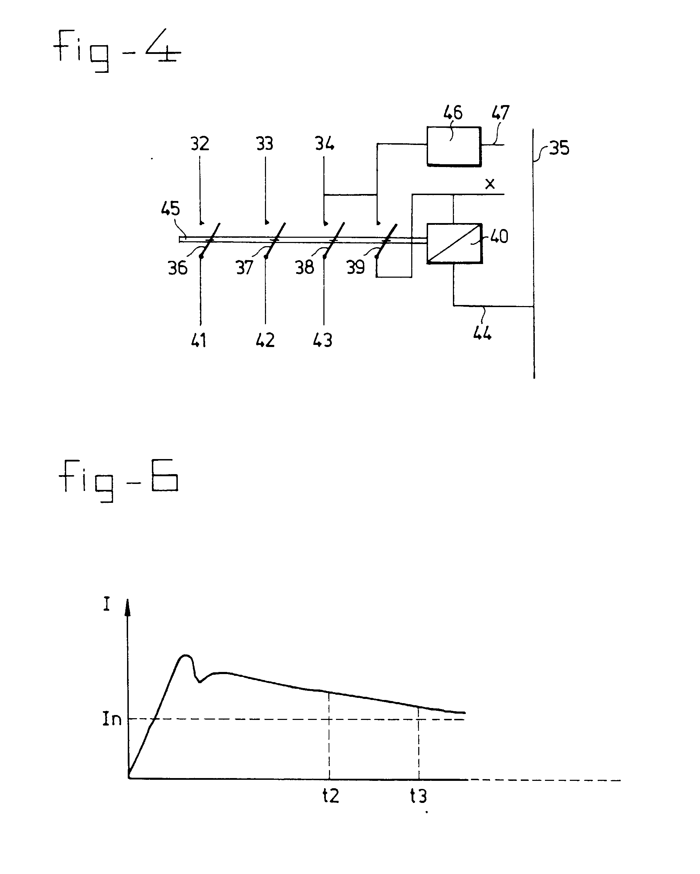

Figure 4 shows an example of an electromagnetic switch 40 connected to a three-phase mains. The three incoming phases are denoted by 32, 33 and 34, respectively, while the three outgoing phases are indicated by 41, 42 and 43, respectively. The three phase connections are switched with the aid of switches 36, 37 and 38, respectively, all three of which are simultaneously opened or closed, which is effected by a drive mechanism 45 attached to all the three switches 36, 37, 38. The drive mechanism 45 is displaced with the aid of the electromagnetic switch 40 which receives its supply current from one of the phases of the mains, for example 34, via a switch 39 which is likewise attached to the drive mechanism 45. The electromagnetic switch 40 is further connected, via a line 44, to the neutral conductor 35 and has an input X for receiving an actuation signal. Finally, a mains monitor 46 is linked to phase line 34, which monitors the state of the mains and can report the information with regard thereto to all the start control units 2 via an output 47. The mains monitor 46 comprises the mains voltage measuring cards 17, 18 shown in Figure 2, and the output 47 thereof is thus connected to the connection line 20 of Figure 2. The latter is effected within a time span of 10 ms. It will be evident to those skilled in the art that variations on the circuit of Figure 4 are possible without affecting the essence thereof. Thus, the mains monitor 46 can be connected to more than one phase, and the electromagnetic switch can receive an actuating current in some other manner.

As long as the mains voltage satisfies predefined conditions, the electromagnetic switch 40 will maintain the switches 36-39 in the conducting state, if the corresponding command has been issued via either one of the local control units 5 or one of the remote control units 8, or as a result of a command from the central control unit 3.

If the mains voltage drops below a certain threshold value Uth1 over a certain time (after at most a few hundred ms, depending on the size of the electromagnetic switch 40), the current supplied to the electromagnetic switch 40 via switch 39 will have become too low to keep the switch 40 in the actuated state, and the electromagnetic switch 40 drops out. Thereupon, all the switches 36-39 are brought into the non-conducting state. Because switch 39 likewise does not conduct, the electromagnetic switch 40 can no longer be actuated without external assistance. Said threshold value Uth1 in the preferred embodiment is equal to ± 0.65 Un (Un is the nominal mains voltage). Actuation takes place, for example, via connection X (Figure 4) with the aid of an auxiliary contact, controlled by the corresponding start control unit 2, which is not shown in the figure but is known to those skilled in the art. Via detectors and lines (not shown), each start control unit 2 is able to interrogate the state of the associated electromagnetic switch 40. This state can then be changed as required.

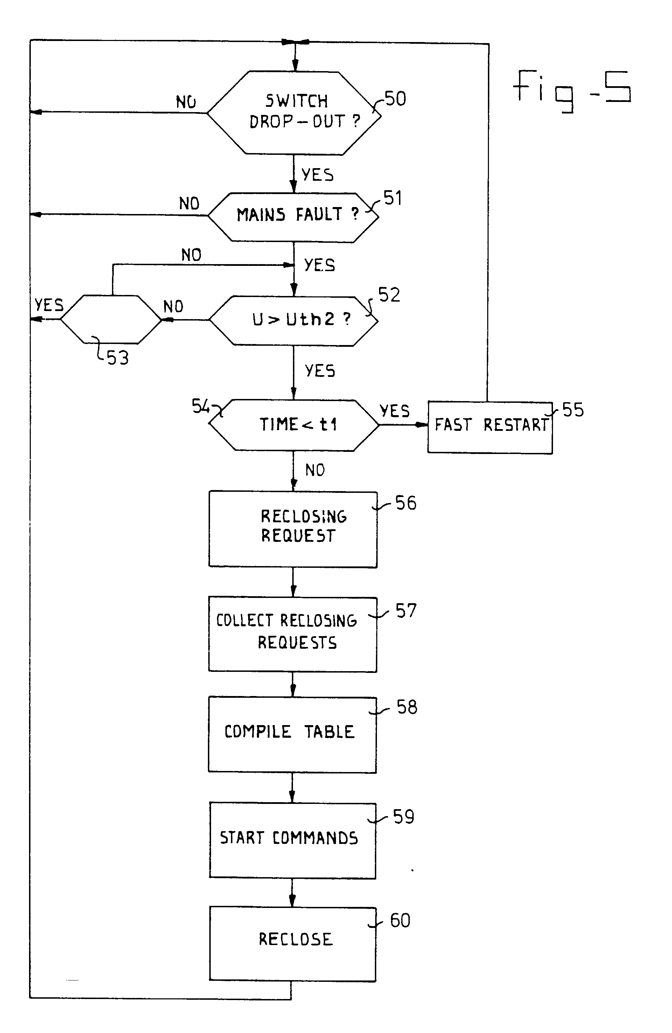

Figure 5 shows a flowchart of the steps which are implemented in computer software of the start control units 2 and the central control unit 3 and which ensure reclosing of the electromagnetic switches 40 after they have dropped out as a result of a fault in the mains voltage. Steps 50-56 and 60 describe actions which take place in each of the start control units 2, while steps 57, 58 and 59 relate to software implemented in the central control unit.

In step 50, the program tests whether the electromagnetic switch 40 in question has dropped out. The information thereon is received by the start control unit 2 from a detector (not shown) which measures the current through the auxiliary contact of the electromagnetic switch 40. As soon as that is the case, the program continues with step 51 in which it is ascertained whether or not the drop-out is the result of a mains fault. This is done, for example, by establishing that the drop-out of the electromagnetic switch 40 coincides with a fault in the mains (U < Uth1) which is detected by means of the mains monitor 46. If the drop-out of the electromagnetic switch 40 is not due to a mains fault, no reclosing takes place, and instead the program returns to step 50. If the drop-out is due to a mains fault, the program continues the reclosing procedure with step 52. The time the program requires to run through the steps 50, 51 is the reaction time of the system which must be very short, for example less than 20 ms.

In step 52, the program tests whether the mains voltage is above a predefined threshold value Uth2. Uth2 is usually set to 0.9 Un. As long as this requirement is not yet met, the program remains in a wait loop in which it tests, in step 53, whether the time elapsed since drop-out of the electromagnetic switch does not exceed the predefined threshold value t4. If that is the case, an alarm signal can be generated and the program returns to the start of the reclosing loop in step 50. It should be noted, that measuring of the mains voltage(s) takes place centrally with the aid of the mains voltage measuring card(s) 17 (and 18), while establishing that an electromagnetic switch has dropped out takes place decentrally.

As soon as the mains voltage has risen above the threshold value Uth2, which means that the mains voltage is once more sufficient for reclosing the electromagnetic switches, the program in step 54 tests for how long the mains fault in question has lasted. If the mains fault has lasted longer than a certain time span t1, which is at most 0.5 sec, all the motors which have failed must be started up again slowly and in a defined sequence, as will be explained below. If, however, the mains fault has been shorter than the time span t1, it can be assumed that the motors in question which were active prior to the fault, still have a certain speed and will be able to be actuated immediately without any safety problems. In this latter case, the program continues with step 55 in which this so-called " fast restart" takes place.

If the mains fault has lasted for longer than t1, not all the electromagnetic switches which have dropped out can be closed simultaneously without the risk of overloading the mains. This is because, if a motor at standstill is switched on, a current flows through the motor windings which is shown diagrammatically in Figure 6. After switching on, the motor, over a short period, draws a large peak current, before the current eventually reaches its nominal value. If, therefore, too many motors are switched on simultaneously, the mains has to supply too much current and the mains voltage may collapse, with the result that the electromagnetic switches which have just been closed drop out again. After a mains failure which has lasted for longer than t1, the program therefore continues with steps 56-60 which together effect the so-called "slow start".

In step 56, the start control unit 2 in question asks the central control unit 3 for permission to switch on its motors or set of motors. During steps 57, 58 and 59, which relate to the software in the central control unit 3, the program in the start control unit 2 waits until the central control unit 3 has granted this permission. In step 57, the central control unit 3 collects all the reclosing requests reported by the start control units. Because some of the electromagnetic switches may have been opened deliberately, not all the programs of the various start control units need have reached step 56. While the central control unit collects the requests from all the start control units, the program in the central control unit is already starting on step 58, in which it compiles, based on predefined criteria, a reclosing table. This table contains the sequence in which the electromagnetic switches in question can best be closed again. The ideal sequence preferably depends on two criteria, namely the process stage at the time the mains fault has occurred, and the type of the motors which have to be switched on at that time. It may be the case, namely, that some motor types are preferably to be switched on before others.

Preferably, the program in the central control unit 3, even while a reclosing table according to the above-mentioned criteria is being compiled, continues with step 59 in which the central control unit issues consecutive start commands to the various start control units in accordance with the above-mentioned table. In this process, the mains monitor 46 also plays an important part. The latter, namely, monitors the state of the mains and, each time the mains voltage rises above a predefined value of preferably 0.9 Un, emits an indication signal which states that the next reclosing may take place. In Figure 6 this takes place at point of time t2. Furthermore, in Figure 6, t3 indicates diagrammatically the point in time at which it is decided in conventional, prior art devices, that the next motor or set of motors may be switched on, t3 in the conventional devices having a fixed predefined value which has a certain safety margin, so that it is never possible for the next motor or set of motors to be switched on too soon. Because the time-wise separation between steps 57, 58 and 59 is not strictly adhered to, but where possible the central control unit 3 carries out the activities of steps 57, 58 and 59 in parallel, time is saved. Furthermore, with regard to the prior art, time is saved because only those motors and sets of motors are placed in the table which have given an indication that they should be switched on again. In the prior art, by contrast, an attempt is made, using a fixed reclosing table, to start up again all the motors, including those which had been switched off deliberately, resulting in an unnecessary waste of computer time.

As soon as the central unit of the mains motor 46 receives the indication signal which indicates that the mains voltage has risen above a certain value (90% Un, Uth2), the central control unit 3 supplies a start command to the start control unit 2 whose turn it is according to the table. This takes place, in the diagram of Figure 5, in step 59. If all the start commands have been issued according to the table sequence, the program located in the central control unit is ready. The program present in each start control unit finishes with step 60, in which the electromagnetic switch is closed again, whereupon the program returns to its start state in step 50.

In addition to the steps shown in the chart of Figure 5, it is preferably also provided that, if one or more of the electromagnetic switches are opened during a reclosing loop, the reclosing loop is interrupted and returns to its start position in step 50. Opening of an electromagnetic switch 40 is effected, for example, by means of a command which is received by the start control unit 2 via the first connection means 4. If the start control unit 2 receives such a command, its reclosing loop will be interrupted. A reclosing loop can also be interrupted deliberately via a suitable command to the start control unit 2 via the first connection means 4. Such a command can be issued at any time via the local control unit 5 or the remote control unit 8.

To summarise, the reclosing loop according to the invention has the following characteristics:
a. no reclosing takes place of those electromagnetic switches which have been opened deliberately;
b. reclosing takes place if the mains voltage once more rises above a predefined threshold value Uth2, Uth2 in the preferred embodiment being approximately 0.9 Un;
c. if a mains fault causes one or more electromagnetic switches to drop out, but lasts for less long than a preset time t1, reclosing takes place directly ("fast restart"); t1 is at most 0.5 sec and preferably ± 0.2 sec, and is the time at which it can be assumed that the motors have not yet come to a standstill and do not demand a large starting current;
d. if a mains fault lasts for longer than t1, switching-on takes place in a staggered manner in such a way that different motors do not simultaneously require high starting currents leading to a collapse of the mains voltage ("slow start");
e. if the mains voltage remains absent for longer than a predefined time, which can be set for each motor or set of motors, the reclosing procedure is interrupted;
f. if during a reclosing procedure one or more electromagnetic switches are opened, the reclosing procedure for the motor or set of motors in question is interrupted.

It will be evident to those skilled in the art that modifications can be applied to the preferred embodiments outlined above without transcending the scope of the concept of the invention which is defined solely by the appended claims. By way of example, the concept of the invention is not limited to electrical motors; it is applicable to the switching-on of any kind of electrical loads having starting current characteristics as diagrammatically shown in Figure 6, i.e. starting current characteristics showing starting peaks being significantly larger than the after-start current flows.

## Claims

1. Apparatus for automatically switching on again at least one load upon restoration of the mains voltage after a mains failure resulting in switching off of said at least one load, comprising switching means (36-38) which are connected between said at least one load and the mains voltage, at least one start control unit (2) for controlling the start of said at least one load, at least one mains monitor (46) for monitoring the state of the mains and for providing indication signals in accordance with the mains state to each start control unit (2) in order to control the switching-on or switching-off of the at least one load to the mains, and a central control unit (3) comprising means (15) for communicating, via first connection means (4), with, inter alia, each start control unit (2), characterised in that the central control unit (3) also comprises
- means (14) for communicating, via other connection means (11), with control units (5, 8) operated by a user,
- means (15) for receiving reclose request signals from each start control unit (2),
- means (14) for compiling a reclosing table after having received said reclose request signals in accordance with predefined criteria upon restoration of the mains voltage after a mains failure resulting in opening of the switching means (36-38), said predefined criteria including the process stage at the time the mains fault has occurred and/or the type of the loads which have to be switched on at that time and
- means (15) for transmitting switching-on commands in accordance with the reclosing table to those start control units (2), which have send a reclose request signal to the central control unit (3).

2. Apparatus according to claim 1 **characterised in that** each load comprises one or more motors and an electromagnetic switch (40) is connected between each switching means (36-38) and each start control unit (2), the electromagnetic switch (40) receiving its power from the mains itself, being controlled by the start control unit (2) and operating the switching means (36-38).

3. Apparatus according to Claim 1 or 2, characterized in that the control units (5, 8) comprise local control units (5) and remote control units (8).

4. Apparatus according to Claim 1, 2 or 3, characterized in that any start control unit (2) further comprises means for immediate closing the opened switching means (36-38) if the mains fault lasted less than a first predefined time period (t1) and in that said start control units (2) do not transmit reclose request signals if the mains fault lasted less than said first predefined time period (t1).

5. Method performed by computer software implemented on the apparatus according to claims 1 and 4 for automatically switching on again at least one load upon restoration of the mains voltage after a mains failure resulting in switching off of said at least one load connected to the mains by switching means (36-38) under the control of at least one start control unit (2) controlling the start of said at least one load, comprising the steps of:
- monitoring the state of the mains;
- providing indication signals in accordance with the mains state to each start control unit (2) in order to control the switching-on or switching-off of the at least one load to the mains;
- communicating via first communication means (4) between a central control unit and each start control unit (2)
characterized by the following steps:
a. sensing the state of the switching means (36-38) and upon detection of opening of one or more of said switching means
b. detecting whether said opening is the result of a mains fault; if not returning to step a and if confirmed
c. detection of the end of the mains fault by testing whether the mains voltage has been restored by measuring whether it has risen above a first predefined threshold value (Uth2), and if confirmed
d. detecting the duration of the mains fault;
e1. if the mains fault lasted less than said first predefined time period (t1), supplying commands for immediate closing of the opened switching means (36-38) and returning to step a, or alternatively
e2. if the mains fault lasted longer than said first predefined time period (t1), compiling a reclosing table in accordance with predefined criteria and for only those start control units (2) that have sent a request for reclosure of their respective switching means (36-38), said predefined criteria including the process stage at the time the mains fault has occurred and/or the type of the loads which have to be switched on at that time;
f. supplying the closing commands for the switching means (36-38) in the sequence of the reclosing table and sensing the state of the mains voltage, each subsequent reclosing command being only issued if the mains voltage has risen above a second predefined threshold value.

6. Method according to Claim 5, characterized in that in step c the time span is also measured which elapses from the moment the mains fault occurred and in that, after a second predefined time period (t4) has been exceeded, the reclosing loop is interrupted.

7. Method according to Claim 5 or 6, characterized in that steps e2 and f are performed in parallel, at least in part.

8. Method according to any one of Claims 5 to 7 inclusive, characterized in that the second predefined time period (t4) can be set individually for each load or set of loads.

9. Method according to any one of Claims 5 to 8 inclusive, characterized in that the first predefined threshold value (Uth2) and the predefined further value are equal to approximately 0.9 Un, Un being the nominal mains voltage.

10. Method according to any one of Claims 5 to 9 inclusive, characterized in that the predefined first time period (tl) is at most 0.5 sec.

11. Method according to Claim 10, characterized in that the predefined first time period (tl) is approximately 0.2 sec.

12. Method according to any one of the preceding claims, characterized in that the loads are motors and the criteria for compiling the reclosing table are derived from characteristics concerning the motors and/or the state of a process controlled by the motors at the time of the mains fault.

## Patentansprüche

1. Gerät für das automatische wiederholte Einschalten mindestens einer Last bei Wiederherstellung der Netzspannung nach einem Netz fehler, der zu der Ausschaltung der mindestens einen Last führt, enthaltend eine Einschaltvorrichtung (36 - 38), die zwischen der mindestens einen Last und der Netzspannung angeschlossen ist, mindestens eine Startsteuereinheit (2) zum Steuern des Starts der mindestens einen Last, mindestens einen Netzmonitor (46) zum Überwachen des Netzzustands und zum Abgeben von Anzeigesignalen in Übereinstimmung mit dem Netzzustand an jede Startsteuereinheit (2) zum Steuern des Einschaltens oder Ausschaltens der mindestens einen Last für das Netz, und einen Zentralsteuereinheit (3) mit einer Vorrichtung (15) zum Kommunizieren über eine erste Verbindungsvorrichtung (4) unter anderem mit jeder Startsteuereinheit (2), **dadurch gekennzeichnet, daß** die Zentralsteuereinheit (3) auch enthält:
- eine Vorrichtung (14) für das Kommunizieren mit durch einen Anwender betriebene Steuereinheiten (5, 8) über eine andere Verbindungsvorrichtung (11),
- eine Vorrichtung (15) zum Empfangen von Signalen gemäß einer Anforderung für ein erneutes Schließen von jeder Startsteuereinheit (2),
- eine Vorrichtung (14) zum Erstellen einer Tabelle für das erneute Schließen nach Empfang der Signale für das Anfordern eines erneuten Schließens in Übereinstimmung mit vordefinierten Kriterien bei Wiederherstellung der Netzspannung nach einem Netzfehler, der zu einem Öffnen der Schaltvorrichtung (36 - 38) führt, derart, daß die vordefinierten Kriterien den Prozeßablauf zum Zeitpunkt des Auftretens des Netzfehlers umfassen und/oder die Art der Lasten, die in diesem Zeitpunkt einzuschalten sind, und
- eine Vorrichtung (15) zum Übertragen der Einschaltbefehle in Übereinstimmung mit der Tabelle für das erneute Schließen an diejenigen Startsteuereinheiten (2), die ein Signal zum Anfordern eines erneuten Schließens an die Zentralsteuereinheit (3) gesendet haben.

2. Gerät nach Anspruch 1, **dadurch gekennzeichnet, daß** jede Last einen oder mehrere Motoren enthält, und daß ein elektromagnetischer Schalter (40) zwischen jeder Schaltvorrichtung (36 - 38) und jeder Startsteuereinheit (2) angeschlossen ist, derart, daß der elektromagnetische Schalter (40) seine Energie von dem Netz selbst unter Steuerung durch die Startsteuereinheit (2) empfängt und die Schaltvorrichtung (36 - 38) betätigt.

3. Gerät nach Anspruch 1 oder 2, **dadurch gekennzeichnet, daß** die Steuereinheiten (5, 8) Lokalsteuereinheiten (5) und Fernsteuereinheiten (8) enthalten.

4. Gerät nach Anspruch 1, 2 oder 3, **dadurch gekennzeichnet**, **daß** jede Startsteuereinlieit (2) ferner eine Vorrichtung für das unmittelbare Schließen der geöffneten Schaltvorrichtung (36 - 38) enthält, und zwar dann, wenn der Netzfehler länger als eine erste vorgegebene Zeitperiode (t1) gedauert hat, und daß die Startsteuereinheiten (2) keine Signale zum Anfordern eines erneuten Schließens übertragen, und zwar dann, wenn der Netzfehler weniger lang als die erste vorgegebene Zeitperiode (t1) gedauert hat.

5. Verfahren, das durch Computersoftware durchgeführt wird, die in dem Gerät gemäß den Patentansprüchen 1 und 4 implementiert ist, zum automatischen erneuten Anschalten mindestens einer Last bei Wiederherstellen der Netzspannung nach einem Netzfehler, der zu einem Ausschalten der mindestens einen an dem Netz angeschlossenen Last führt, und zwar mit einer Schaltvorrichtung (36 - 38) unter Steuerung mindestens einer Startsteuereinheit (2) zum Steuern des Starts der mindestens einen Last, enthaltend die Schritte:
- Überwachen des Netzzustandes;
- Bereitstellen von Anzeigesignalen in Übereinstimmung mit dem Netzzustand bei jeder Startsteuereinheit (2) zum Steuern des Einschaltens oder Ausschaltens der mindestens einen Netzlast;
- Durchführen einer Kommunikation zwischen einer Zentralsteuereinheit und jeder Startsteuereinheit (2) über eine erste Kommunikationsvorrichtung (4);
**gekennzeichnet durch** die folgenden Schritte:
a) Messen des Zustands der Schaltvorrichtung (36 - 38) und bei Detektion eines Öffnens einer oder mehrerer der Schaltvorrichtungen;
b) Detektieren der Tatsache, ob das Öffnen das Ergebnis eines Netzfehlers ist; falls nein, Rückkehr zu dem Schritt a), bei Bestätigung,
c) Detektieren des Endes des Netzfehlers durch Testen der Tatsache, ob die Netzspannung wiederhergestellt ist, durch Messen der Tatsache, ob sie über einen ersten vorgegebenen Schwellwert (Uth2) angestiegen ist, bei Bestätigen
d) Detektieren der Dauer des Netzfehlers;
e1) sofern der Netzfehler weniger lang als die erste vorbestimmte Zeitperiode (t1) gedauert hat, Zuführen von Befehlen für ein unmittelbares Schließen der geöffneten Schaltvorrichtung (36 - 38) und Rückkehr zu dem Schritt a), oder alternativ
e2) sofern der Netzfehler länger als die erste vorgegebene Zeitperiode (t1) gedauert hat, Erstellen einer Tabelle für das erneute Schließen in Übereinstimmung mit vorgegebenen Kriterien für lediglich diejenigen Startsteuereinheiten (2), die eine Anforderung für ein erneutes Schließen ihrer zugeordneten Schaltvorrichtungen (36 - 38) gesendet haben, derart, daß die vorgegebenen Kriterien den Prozeßzustand im Zeitpunkt des Auftretens des Netzfehlers enthalten und/oder die Art der Lasten, die zu dieser Zeit einzuschalten sind;
f) Zuführen des Schließbefehls für die Schaltvorrichtung (36 - 38) in Abfolge der Tabelle für das erneute Schließen und Messen des Zustands der Netzspannung, derart, daß jeder nachfolgende Befehl für ein erneutes Schließen lediglich dann abgegeben wird, wenn die Netzspannung über einen zweiten vordefinierten Schwellwert angestiegen ist.

6. Verfahren nach Anspruch 5, **dadurch gekennzeichnet, daß** im Schritt c) auch die Zeitspanne gemessen wird, die seit dem Moment des Netzfehlers verstrichen ist, und daß nach dem Überschreiten einer zweiten vorbestimmten Zeitperiode (t4) die Schleife für das erneute Schließen unterbrochen wird.

7. Verfahren nach Anspruch 5 oder 6, **dadurch gekennzeichnet, daß** die Schritte e2) und f) zumindest teilweise parallel durchgeführt werden.

8. Verfahren nach einem der Ansprüche 5 bis 7 inklusive, **dadurch gekennzeichnet, daß** sich die zweite vorbestimmte Zeitperiode (t4) individuell für jede Last oder Gruppe von Lasten festlegen läßt.

9. Verfahren nach einem der Ansprüche 4 bis 8 inklusive, **dadurch gekennzeichnet, daß** der erste vorgegebene Schwellwert (Uth2) und der vorgegebene weitere Wert gleich ungefähr 0,9 Un sind, mit Un als Nennetzspannung.

10. Verfahren nach einem der Ansprüche 5 bis 9 inklusive, **dadurch gekennzeichnet, daß** die vorgegebene erste Zeitperiode (tl) höchstens 0,5 Sekunden beträgt.

11. Verfahren nach Anspruch 10, **dadurch gekennzeichnet, daß** die vorgegebene erste Zeitperiode (t1) ungefähr 0,2 sek beträgt.

12. Verfahren nach einem der vorhergehenden Ansprüche, **dadurch gekennzeichnet, daß** die Lasten Motoren sind und daß die Kriterien zum Erstellen der Tabelle für das erneute Schließen anhand der Eigenschaften im Hinblick auf die Motoren und/oder den Zustand eines durch die Motoren im Zeitpunkt des Netzfehlers gesteuerten Prozesses abgeleitet werden.

## Revendications

1. Appareil pour remettre automatiquement sous tension au moins une charge lors du rétablissement de la tension du réseau après une panne de réseau qui a produit une mise hors tension de ladite charge au nombre d'au moins une, comprenant des moyens interrupteurs (36-38) qui sont branchés entre ladite charge au nombre d'au moins une et la tension du réseau, au moins une unité (2) de commande de démarrage servant à commander le démarrage de ladite charge au nombre d'au moins une, au moins un appareil (46) de surveillance du réseau servant à surveiller l'état du réseau et à fournir des signaux d'indication en fonction de l'état du réseau à chaque unité (2) de commande de démarrage de manière à commander le branchement ou le débranchement de la charge au nombre d'au moins une sur le réseau, et une unité de commande centrale (3) comprenant des moyens (15) pour communiquer, par un premier moyen de connexion (4), avec. entre autres, chaque unité (2) de commande du démarrage,
caractérisé en ce que l'unité de commande centrale (3) comprend aussi
- un moyen (14) pour communiquer, par un autre moyen de connexion (11), avec des unités de commande (5, 8) actionnées par un utilisateur,
- un moyen (15) pour recevoir des signaux de requête de refermeture provenant de chaque unité (2) de commande de redémarrage,
- un moyen (14) pour compiler une table de refermeture après réception desdits signaux de requête de refermeture selon des critères prédéfinis lors du rétablissement de la tension du réseau après une panne de réseau ayant entraîné une ouverture des moyens interrupteurs (36-38), lesdits critères prédéfinis comprenant l'étape du process à l'instant où le défaut de réseau s'est produit et/ou le type de charges qui doivent être mises sous tension à cet instant, et
- un moyen (15) pour envoyer des ordres de mise sous tension en accord avec la table de refermeture aux unités (2) de commande de démarrage qui ont envoyé un signal de requête de fermeture à l'unité de commande centrale (3).

2. Appareil selon la revendication 1, caractérisé en ce que chaque charge comprend un ou plusieurs moteurs et un commutateur électromagnétique (40) est branché entre chaque moyen interrupteur (36-38) et chaque unité (2) de commande de démarrage, le commutateur électromagnétique (40) recevant son énergie du réseau lui-même, étant commandé par l'unité (2) de commande de démarrage et actionnant les moyens interrupteurs (36-38).

3. Appareil selon la revendication 1 ou 2, caractérisé en ce que les unités de commande (5, 8) comprennent des unités de commande locales (5) et des unités de commande à distance (8).

4. Appareil selon la revendication 1, 2 ou 3, caractérisé en ce que toute unité (2) de commande de démarrage comprend en outre un moyen de fermeture immédiate des moyens interrupteurs ouverts (36-38) si le défaut de réseau a duré moins qu'un premier laps de temps prédéterminé (t₁) et en ce que lesdites unités (2) de commande de démarrage ne transmettent pas de signaux de requête de refermeture si le défaut de réseau a duré moins que ledit premier laps de temps prédéterminé (t₁).

5. Procédé mis en oeuvre par un logiciel informatique implanté sur l'appareil des revendications 1 et 4, servant à remettre automatiquement sous tension au moins une charge lors du rétablissement de la tension du réseau après une panne de réseau qui a produit une mise hors tension de ladite charge au nombre d'au moins une branchée au réseau par des moyens interrupteurs (36-38) sous la commande d'au moins une unité (2) de commande de démarrage qui commande le démarrage de ladite charge au nombre d'au moins une, comprenant les étapes consistant à :
- surveiller l'état du réseau,
- fournir des signaux d'indication en accord avec l'état du réseau à chaque unité (2) de commande de démarrage pour commander le branchement ou le débranchement de la charge au nombre d'au moins une sur le réseau,
- communiquer par un premier moyen de communication (4) entre une unité de commande centrale et chaque unité (2) de commande de démarrage,
caractérisé par les étapes consistant à :
a) détecter l'état des moyens interrupteurs (36-38) et, en cas de détection de l'ouverture d'un ou plusieurs desdits moyens interrupteurs,
b) détecter si ladite ouverture est le résultat d'un défaut du réseau et revenir à l'étape (a) si ce n'est pas le cas ou, si c'est le cas,
c) détecter la fin du défaut de réseau en testant si la tension de réseau a été rétablie par mesure du fait qu'elle a ou non monté au-dessus d'une première valeur de seuil prédéterminée (Uth₂) et, si cela est confirmé,
d) détecter la durée du défaut de réseau, puis
e₁) si le défaut de réseau a duré moins que ledit premier laps de temps prédéterminé (t₁), envoyer des ordres de fermeture immédiate des moyens interrupteurs ouverts (36-38) et revenir à l'étape (a), ou
e₂) si le défaut de réseau a duré plus longtemps que ledit premier laps de temps prédéterminé (t₁), compiler une table de refermeture en fonction de critères prédéterminés et pour les seules unités (2) de commande de démarrage qui ont envoyé une requête de refermeture de leurs moyens interrupteurs (36-38) respectifs, lesdits critères prédéterminés comprenant l'étape du process à l'instant où le défaut de réseau s'est produit et/ou le type de charges qui doivent être mise sous tension à cet instant,
f) envoyer les ordres de fermeture aux moyens interrupteurs (36-38) en accord avec la séquence de la table de refermeture et détecter l'état de la tension du réseau, chaque ordre de refermeture suivant n'étant délivré que si la tension du réseau s'est élevée au-dessus d'une deuxième valeur de seuil prédéfinie.

6. Procédé selon la revendication 5, caractérisé en ce que lors de l'étape (c), on mesure aussi l'intervalle de temps qui s'écoule depuis le moment où le défaut de réseau s'est produit et en ce que, une fois qu'un deuxième laps de temps prédéterminé (t₄) s'est écoulés la boucle de refermeture est interrompue.

7. Procédé selon la revendication 5 ou 6, caractérisé en ce que les étapes (e₂) et (f) se font en parallèle, tout au moins en partie.

8. Procédé selon l'une quelconque des revendications 5 à 7. caractérisé en ce que le deuxième laps de temps prédéterminé (t₄) peut être défini individuellement pour chaque charge ou groupe de charges.

9. Procédé selon l'une quelconque des revendications 5 à 8, caractérisé en ce que la première valeur de seuil prédéterminée (Uth₂) et l'autre valeur prédéterminée sont égales à environ 0,9 Un, Un étant la tension nominale du réseau.

10. Procédé selon l'une quelconque des revendications 5 à 9, caractérisé en ce que le premier laps de temps prédéterminé (t₁) vaut au maximum 0,5 secondes.

11. Procédé selon la revendication 10, caractérisé en ce que le premier laps de temps prédéterminé (t₁) vaut approximativement 0,2 secondes.

12. Procédé selon l'une quelconque des revendications précédentes, caractérisé en ce que les charges sont des moteurs et les critères de compilation de la table de refermeture sont déduits de caractéristiques concernant les moteurs et/ou l'état d'un process commandé par les moteurs à l'instant où le défaut de réseau s'est produit.
